# EUROPÄISCHE PATENTSCHRIFT

(11) **EP 3 354 399 B1**
(45) Veröffentlichungstag und Bekanntmachung des Hinweises auf die Patenterteilung: **03.07.2019**
(21) Anmeldenummer: 18152065.1
(22) Anmeldetag: 17.01.2018
(51) Int. Cl.: B23Q 7/00, B23B 15/00

(54) **AUSWURFVORRICHTUNG ZUM AUSWERFEN VON WERKSTÜCKEN, WELCHE IN EINER DREHMASCHINE GEFERTIGT WERDEN UND VERWENDUNGSMETHODE**
EJECTOR UNIT FOR EJECTING WORKPIECES MANUFACTURED IN A TURNING MACHINE AND METHOD OF USE
DISPOSITIF D'ÉJECTION PERMETTANT D'ÉJECTER DES PIÈCES À USINER, LESQUELLES SONT FABRIQUÉES DANS UNE TOUR D'USINAGE ET MÉTHODE D'UTILISATION

(30) Priorität: 17.01.2017 DE 102017100852
(43) Veröffentlichungstag der Anmeldung: 01.08.2018
(73) Patentinhaber: HB Turnkey GmbH, 78194 Immendingen (DE)
(72) Erfinder: Blessing, Michael, 78628 Zepfenhan (DE)
(74) Vertreter: Westphal, Mussgnug & Partner Patentanwälte mbB

(56) Entgegenhaltungen:
- FR-A- 1 273 217
- JP-A- 2007 061 959

## Beschreibung

Die vorliegende Erfindung betrifft eine Auswurfvorrichtung zum Auswerfen von Werkstücken, welche in einer Drehmaschine gefertigt werden , gemäß dem Anspruch 1 und ein Verfahren zum Auswerfen von Werkstücken, welche in einer Drehmaschine nach einem der Vorrichtungsansprüche der Erfindung gefertigt werden, gemäß dem Anspruch 9. Eine Vorrichtung gemäß dem Oberbegriff des Anspruchs 1 ist aus dem Dokument JP2007061959A bekannt.

Zum drehenden Bearbeiten von Werkstücken mit Drehmaschinen werden diese in eine Einspanneinrichtung der Drehmaschine eingespannt. Die Einspanneinrichtung ist drehbar an einem Gehäuse der Drehmaschine gelagert und kann mittels einer Antriebseinrichtung gedreht werden, so dass das eingespannte Werkstück um die eigene Achse gedreht wird. Die Einspanneinrichtung umfasst beispielsweise eine Spannzange mit einem freien Aufnahmeende, über welches die zu bearbeitenden Werkstücke zumindest teilweise in die Spannzange eingebracht und schnell eingespannt werden können, wobei sie in eine zur Drehmaschine hin gerichtete Richtung bewegt werden. Nach der Bearbeitung werden die Werkstücke wieder aus der Spannzange entnommen, wobei sie in eine von der Drehmaschine weg gerichtete Richtung bewegt werden.

Da die Richtungen des Werkstücks beim Einspannen und bei der Entnahme entgegengesetzt sind, kann das nachfolgende Werkstück erst dann eingespannt werden, wenn das zuvor bearbeitete Werkstück den Zugang zum freien Aufnahmeende für das nachfolgende Werkstück nicht mehr versperrt. Aufgrund der entgegengesetzten Richtungen beim Einspannen und bei der Entnahme und der damit verbundenen Wartezeit kann die Taktzeit nicht weiter verkürzt werden, was zu einer nicht optimalen Auslastung der Drehmaschine führt.

Um die Taktzeiten zu verkürzen, sind Drehmaschinen entwickelt worden, welche ein das Gehäuse durchlaufendes Abführrohr mit einem ersten Ende und einem zweiten Ende aufweist. Das erste Ende schließt sich der Einspanneinrichtung zum Inneren der Drehmaschine hin an und ist vorzugsweise konzentrisch zum Einspannzentrum der Einspanneinrichtung angeordnet. Folglich befinden sich die eingespannten Werkstücke und das Abführrohr auf derselben Achse. Je nach Länge des eingespannten Werkstücks und der Position, an welcher es bearbeitet werden soll, kann es bereits im eingespannten Zustand in das Abführrohr hineinragen. Das fertig bearbeitete Werkstück kann von einem nachfolgenden Werkstück weiter in das Abführrohr geschoben werden, so dass das Werkstück beim Einspannen und bei der Entnahme in derselben Richtung bewegt wird. Das nachfolgende Werkstück kann daher sofort in die Einspanneinrichtung eingebracht werden, sobald die Bearbeitung des vorangegangenen Werkstücks abgeschlossen ist. Im Gegensatz zu dem eingangs beschriebenen Fall, bei welchem die Richtungen des Werkstücks beim Einspannen und bei der Entnahme entgegengesetzt sind, muss hier nicht abgewartet werden, bis dass das vorangegangene Werkstück den Zugang zum freien Aufnahmeende für das nachfolgende Werkstück nicht mehr versperrt. Folglich können die Taktzeit verkürzt und die Drehmaschine besser ausgelastet werden. Eine derartige Drehmaschine ist in der JP 2007 061 959 A gezeigt.

Die FR 1 273 217 A1 zeigt eine Zuführvorrichtung, mit welcher Werkstücke unter Verwendung einer Hydraulikflüssigkeit oder Druckluft zu einer Bearbeitungsmaschine, beispielsweise einer Gewindeschneidmaschine, zugeführt werden können.

Wie bereits erwähnt, werden die Werkstücke dadurch durch die Einspanneinrichtung und das Abführrohr bewegt, dass sie von nachfolgenden Werkstücken vorgeschoben werden. Dieser Vorgang wird solange fortgesetzt, bis dass das betreffende Werkstück das zweite Ende des Abführrohrs erreicht hat. Je kürzer die Werkstücke sind, desto mehr Werkstücke befinden sich im Abführrohr. Immer dann, wenn ein neu zu bearbeitendes Werkstück in die Spannzangen eingebracht wird, werden die im Abführrohr befindlichen Werkstücke vorgeschoben, so dass diese eine diskontinuierliche Bewegung durchführen. Bei jeder Beschleunigung stoßen die Werkstücke aneinander, was zu Beschädigungen der Werkstücke führen kann, insbesondere dann, wenn diese an den Berührungsflächen Spitzen aufweisen. Zwar ist das Abführrohr auf den Durchmesser der zu bearbeitenden Werkstücke angepasst, allerdings werden diese nicht optimal geführt, so dass sie etwas verkippen können. Daher können sich die Werkstücke ineinander verkeilen, wenn sie an ihren Berührungsflächen Spitzen oder Absätze aufweisen. Weisen die Werkstücke am einen Ende ein Außengewinde und am anderen Ende ein korrespondierendes Innengewinde auf, können sie sich im Abführrohr auch verschrauben, da sie sich relativ zueinander im Führungsrohr drehen können.

Wie bereits erwähnt, ist das Abführrohr vollständig mit Werkstücken gefüllt. Um diese zu bewegen, ist eine relativ hohe Energie notwendig, die beispielsweise von einem Greifroboter, der das zu bearbeitende Werkstück in die Einspanneinrichtung einsetzt, oder von einem zur Einspanneinrichtung bewegbaren Schlitten aufgebracht werden muss.

Da die Werkstücke im Abführrohr aneinander anschlagen, bildet sich Abrieb, welcher das Abführrohr verschmutzt. Zudem können sich Späne von der Bearbeitung im Abführrohr sammeln. Das Abführrohr muss daher in regelmäßigen Abständen gereinigt werden. Während der Reinigung ist die Drehmaschine nicht einsatzbereit, was sich negativ auf die Auslastung auswirkt.

Aufgabe einer Ausführungsform der vorliegenden Erfindung ist es daher, eine Auswurfvorrichtung und eine Drehmaschine anzugeben, mit welchen den oben genannten Nachteilen begegnet wird. Insbesondere soll eine Auswurfvorrichtung und eine Drehmaschine angegeben werden, welche eine hohe Taktzeit bei gleichzeitig verringerter Wahrscheinlichkeit der Beschädigung der Werkstücke ermöglichen und den Reinigungsaufwand des Abführrohrs verringern.

Diese Aufgabe wird mit den in den Ansprüchen 1, 9 und 10 angegebenen Merkmalen gelöst. Vorteilhafte Ausführungsformen sind Gegenstand der Unteransprüche.

Eine Ausführungsform der Erfindung betrifft eine Auswurfvorrichtung zum Auswerfen von Werkstücken, welche in einer Drehmaschine gefertigt werden, wobei die Drehmaschine ein Gehäuse, eine am Gehäuse drehbar gelagerte Einspanneinrichtung zum Einspannen des Werkstücks während der Bearbeitung, und ein das Gehäuse durchlaufendes Abführrohr mit einem ersten Ende und einem zweiten Ende aufweist, und die Einspanneinrichtung einen Hohlraum umschließt, mit welchem das Abführrohr über das erste Ende verbunden ist und das bearbeitete Werkstück zum Auswerfen aus der Drehmaschine vom ersten Ende zum zweiten Ende durch das Abführrohr durchführbar ist, und die Auswurfvorrichtung an eine Fluidleitung anschließbar ist, welche mit einem Fluidreservoir zum Vorhalten eines Fluids, und dem Hohlraum in Kommunikation steht und welche mit einer Fördereinheit zum Fördern des Fluids vom Fluidreservoir in den Hohlraum zusammenwirkt, und Strömungsrichtmittel umfasst, mit welchen die Strömungsrichtung des Fluids aus dem Hohlraum so gewählt werden kann, dass das Fluid den Hohlraum entweder durch das Abführrohr oder durch die Einspanneinrichtung verlässt, wobei das Fluid das bearbeitete Werkstück je nach gewählter Strömungsrichtung durch das Abführohr oder die Einspanneinrichtung fördert und auswirft.

Das Fluid dient zum Bereitstellen eines Förderdrucks, mit welchem die Werkstücke innerhalb der Drehmaschine bewegt werden können. Insofern ist es nicht notwendig, die Werkstücke mit nachfolgenden Werkstücken zu bewegen. Das Fluid kann so gefördert werden, dass sich nur ein Werkstück im Abführrohr befindet, so dass keine Berührung der Werkstücke untereinander stattfindet. Folglich werden Beschädigungen und Verschraubungen der Werkstücke vermieden. Weiterhin bewirkt das Fluid eine Abfuhr von Spänen und Abrieb, so dass das Abführrohr nicht in einem separaten Reinigungsschritt gereinigt werden muss. Die Ausfallzeit der Drehmaschine wird vermieden. Zudem bewirkt das Fluid eine Schmierung des Abführrohrs, so dass das Werkstück entlang des Abführrohrs gleiten kann, wodurch Abrieb vermieden wird.

Viele Drehmaschinen weisen bereits einen Fluidkreislauf, insbesondere einen Kühlmittelkreislauf auf. In diesen Fällen weist die Drehmaschine das Fluidreservoir, die Fluidleitung und/oder die Fördereinheit auf, an welchen die Auswurfvorrichtung angeschlossen werden kann, so dass die Umsetzung der vorschlagsgemäßen Idee sehr einfach ist, da auf bereits vorhandene Komponenten aufgebaut werden kann. Wenn als Fluid Druckluft verwendet wird, kann die Auswurfvorrichtung an ein bereits vorhandenes Druckluftnetz angeschlossen werden. Die Fördereinheit ist in diesem Fall ein Kompressor, mit welchem die Luft verdichtet wird. Wenn keine der beiden Fälle zutrifft, kann die Auswurfvorrichtung auch selbst so ausgestattet sein, dass sie das Fluidreservoir, die Fluidleitung und/oder die Fördereinheit umfasst.

Die Strömungsrichtmittel ermöglichen es, die Strömungsrichtung, entlang welcher das Fluid den Hohlraum verlässt, zu wählen. Zum einen kann das Fluid den Hohlraum über die Einspanneinrichtung und zum anderen über das Abführrohr verlassen. Auch wenn es im Hinblick auf eine möglichst geringe Taktzeit bevorzugt ist, die Strömungsrichtung so zu wählen, dass das Fluid den Hohlraum über das Abführohr verlässt und folglich die Werkstücke über das zweite Ende des Abführrohrs ausgeworfen werden, kann es sich bei einigen Werkstücken anbieten, das Werkstück über das eingangs erwähnte Aufnahmeende der Einspanneinrichtung auszuwerfen, wobei das Werkstück gegen die Bewegungsrichtung beim Einspannen bewegt wird. Insofern bietet die vorschlagsgemäße Auswurfvorrichtung die Möglichkeit, die Auswurfrichtung und folglich den Ort, an welchem das Werkstück die Drehmaschine verlässt, zu wählen, so dass die mit der vorschlagsgemäßen Auswurfvorrichtung bestückte Drehmaschine sehr flexibel einsetzbar ist.

Erfindungsgemäß umfassen die Strömungsrichtmittel zumindest einen in die Einspanneinrichtung oder das Abführrohr einbringbaren und dort fixierbaren Sperrkörper, mit welchem die Einspanneinrichtung oder das Abführrohr abdichtbar ist. Der Sperrkörper muss nur geeignet sein, zumindest einen Großteil der Strömung des Fluids durch die Einspanneinrichtung oder das Abführrohr zu verhindern und durch das jeweils andere Bauteil zu lenken. Insofern stellt eine Abdichtung den Idealfall dar, allerdings soll unter Abdichtung auch eine bestimmte Leckage fallen, die aber so gering ist, dass eine Förderung des Werkstücks durch das nicht abgedichtete Bauteil problemlos möglich ist. Der Sperrkörper kann beispielsweise in Form eines Stopfens ausgebildet sein, welcher in das Abführrohr eingebracht wird. Der Sperrkörper kann aus einem flexiblen Material gefertigt sein und ein Übermaß gegenüber dem Abführrohr aufweisen, so dass der Sperrkörper über einen Reibschluss im Abführrohr fixiert wird, wodurch verhindert wird, dass er vom Fluid wieder aus dem Abführrohr entfernt wird. Alternativ oder kumulativ kann eine in den Hohlraum einbringbare Sperrplatte verwendet werden. In beiden Fällen kann die Strömungsrichtung auf eine relativ einfache Weise wunschgemäß geändert werden.

In einer weitergebildeten Ausführungsform kann der Sperrkörper von einem Werkstück gebildet werden. Es hat sich herausgestellt, dass es ausreichen kann, zum Auswählen der Strömungsrichtung die Werkstücke selbst als Sperrkörper zu verwenden. Insbesondere kann ein in der Einspanneinrichtung eingespanntes Werkstück als Sperrkörper verwendet werden, um die Einspanneinrichtung für das Fluid zu sperren, wodurch bewirkt wird, dass das Fluid den Hohlraum durch das Abführrohr verlässt. Insofern müssen keine weiteren Maßnahmen getroffen werden, um die Einspanneinrichtung für das Fluid zu sperren. Man muss nur die Fördereinheit so ansteuern, dass sie das Fluid nicht fördert, wenn das Werkstück aus der Einspanneinrichtung entnommen werden soll und folglich die Einspannung aufgehoben wird.

Bei einer weitergebildeten Ausführungsform kann die Auswurfvorrichtung ein in das Abführrohr einschiebbares Innenrohr aufweisen, welches relativ zum Abführrohr verschiebbar und fixierbar ist, wobei das bearbeitete Werkstück zum Auswerfen aus der Drehmaschine durch das Innenrohr durchführbar ist. Mit dem Innenrohr kann der Innendurchmesser flexibel an den Außendurchmesser des Werkstücks angepasst werden. Hierzu kann eine Anzahl von verschiedenen Innenrohren vorgesehen werden, welche Innendurchmesser aufweisen, welche den üblicherweise gefertigten Außendurchmessern der Werkstücke entsprechen. Folglich können die Werkstücke gut im Innenrohr geführt werden, was den Abrieb und die Wahrscheinlichkeit von Beschädigungen reduziert. Zudem kann das Innenrohr relativ zum Abführrohr axial verschoben werden, wodurch auf unterschiedliche Längen der Werkstücke reagiert werden kann.

Bei einer weiteren Ausführungsform kann zwischen dem Innenrohr und dem Abführrohr ein in den Hohlraum mündender Kanal gebildet sein, welcher einen Teil der Fluidleitung bildet. Aufgrund des in das Abführrohr eingeschobenen Innenrohrs kann die Fluidleitung auf einfache Weise in den Hohlraum geführt werden, ohne dass besondere Maßnahmen zum Führen der Fluidleitung durch die Einspanneinrichtung ergriffen werden. Zudem ist eine Nachrüstung für den Fall relativ einfach, wenn die Drehmaschine bereits ein Abführrohr aufweist.

Eine weitergebildete Ausführungsform zeichnet sich dadurch aus, dass der Kanal von einem Abschnitt gebildet wird, in welchem das Innenrohr einen verringerten Außendurchmesser aufweist. Durch bloßes Einschieben in das Abführrohr bildet sich ein Ringspalt, so dass der Kanal auf sehr einfache Weise hergestellt werden kann. Insbesondere müssen an der Drehmaschine selbst keine konstruktiven Änderungen vorgenommen werden, wenn diese bereits ein Abführrohr aufweist. Insofern eignet sich diese Ausführungsform besonders zum Nachrüsten.

Gemäß der Erfindung umfasst die Fluidleitung einen mit dem Gehäuse verbindbaren Anschlusskörper, der einen mit dem Kanal in Kommunikation bringbaren Abschnitt der Fluidleitung bildet. Auch diese Ausführungsform eignet sich insbesondere für die Nachrüstung bestehender Drehmaschinen. Der Anschlusskörper kann Anschlüsse aufweisen, an welche die übrige, zum Fluidreservoir führende Fluidleitung angeschlossen werden kann. Weiterhin kann der Anschlusskörper so ausgestaltet sein, dass er auf einfache Weise die Verbindung zur Fluidleitung innerhalb der Drehmaschine herstellt. Weitere konstruktive Änderungen sind dann nicht mehr erforderlich.

Eine weitere Ausführungsform zeichnet sich dadurch aus, dass das Fluidreservoir zumindest ein Auffangbecken umfasst, welches im Bereich der Einspanneinrichtung und/oder des zweiten Endes des Abführrohrs angeordnet ist und welches die ausgeworfenen Werkstücke aufnimmt. Als Fluid kann beispielsweise Druckluft oder Wasser verwendet werden, wobei sich die Verwendung von Öl aufgrund der guten Schmierungseigenschaften besonders anbietet. Wird Öl, insbesondere Maschinenöl, oder ein Kühlmittel verwendet, muss es aufgefangen werden, wenn es über das zweite Ende des Abführrohrs oder der Einspanneinrichtung aus der Drehmaschine austritt. Hierzu bieten sich Auffangbecken an, welche das austretende Maschinenöl auffangen. In dieser Ausführungsform ist das Auffangbecken mit dem Fluidreservoir verbunden oder es wird vom Fluidreservoir +gebildet, so dass das Maschinenöl im Kreis gefördert werden kann. Hierdurch wird eine einfache Handhabung des Maschinenöls ermöglicht und der Verbrauch an Maschinenöl gering gehalten. Die Menge des im Kreis geförderten Maschinenöls kann so gewählt werden, dass das Auffangbecken einen Mindestfüllstand aufweist. In dieser Ausführungsform wird nicht nur das Maschinenöl vom Auffangbecken aufgefangen, sondern auch die ausgeworfenen Werkstücke. Aufgrund des Mindestfüllstands treffen die Werkstücke nicht direkt auf den Boden des Auffangbeckens auf, sondern treffen zunächst auf die Oberfläche des Maschinenöls, wodurch der Aufprall auf den Boden des Auffangbeckens gedämpft wird. Hierdurch werden Beschädigungen des Werkstücks infolge des Aufpralls verringert.

Eine Ausgestaltung der Erfindung betrifft eine Drehmaschine zum Bearbeiten von Werkstücken, umfassend ein Gehäuse, eine am Gehäuse drehbar gelagerte Einspanneinrichtung zum Einspannen des Werkstücks während der Bearbeitung, und ein das Gehäuse durchlaufendes Abführrohr mit einem ersten Ende und einem zweiten Ende, wobei die Einspanneinrichtung einen Hohlraum umschließt, mit welchem das Abführrohr über das erste Ende verbunden ist und das bearbeitete Werkstück zum Auswerfen aus der Drehmaschine vom ersten Ende zum zweiten Ende durch das Abführrohr durchführbar ist, und eine Auswurfvorrichtung nach einem der vorherigen Ausführungsformen.

Eine Ausführung der Erfindung betrifft ein Verfahren zum Auswerfen von Werkstücken, welche in einer Drehmaschine nach der zuvor beschriebenen Ausgestaltung gefertigt werden, umfassend folgende Schritte:
- Vorhalten eines Fluids in einem Fluidreservoir,
- Fördern des Fluids vom Fluidreservoir in den Hohlraum mit einer Fördereinheit, welche mit einer Fluidleitung zusammenwirkt, welche mit dem Fluidreservoir und dem Hohlraum in Kommunikation steht,
- Wählen der Strömungsrichtung des Fluids mit Strömungsrichtmitteln derart, dass das Fluid den Hohlraum entweder durch das Abführrohr oder durch die Einspanneinrichtung verlässt und das Fluid das bearbeitete Werkstück je nach gewählter Strömungsrichtung durch das Abführohr oder die Einspanneinrichtung fördert und auswirft.

Die technischen Effekte und Vorteile, die sich mit der vorschlagsgemäßen Drehmaschine und dem vorschlagsgemäßen Verfahren erreichen lassen, entsprechen denjenigen, die für die vorliegende Auswurfvorrichtung erörtert worden sind. Zusammenfassend sei darauf hingewiesen, dass es möglich ist, die Werkstücke mit dem Fluid zu fördern, so dass zum Bewegen der Werkstücke im Abführrohr keine Berührung mit anderen Werkstücken notwendig ist, weshalb Beschädigungen infolge der Berührungen vermieden werden. Zudem befinden sich jeweils nur ein Werkstück oder deutlich voneinander beabstandete Werkstücke im Abführrohr, so dass sich die Werkstücke nicht verkeilen und im Abführrohr stecken bleiben können. Die Förderung des Fluids durch das Abführrohr bewirkt eine kontinuierliche Abfuhr von Spänen und Abrieb, so dass das Abführrohr nicht in einem separaten Reinigungsschritt gereinigt werden muss. Die Ausfallzeit der Drehmaschine wird vermieden. Zudem bewirkt das Fluid eine Schmierung des Abführrohrs, so dass das Werkstück entlang des Abführrohrs gleiten kann, wodurch Abrieb vermieden wird.

Wie bereits erörtert, kann die Drehmaschine die Fluidleitung, das Fluidreservoir und die Fördereinheit selbst aufweisen. Ist dies nicht der Fall, kann die Auswurfvorrichtung an ein externes Fluidnetz, beispielsweis ein Druckluftnetz angeschlossen werden. Ist auch dies nicht vorhanden, können die Fluidleitung, das Fluidreservoir und die Fördereinheit Teil der Auswurfvorrichtung sein.

Darüber hinaus ermöglichen es die Strömungsrichtmittel, die Strömungsrichtung, entlang welcher das Fluid den Hohlraum verlässt, zu wählen. Zum einen kann das Fluid den Hohlraum über die Einspanneinrichtung und zum anderen über das Abführrohr verlassen. Insofern bietet die vorschlagsgemäße Auswurfvorrichtung die Möglichkeit, die Auswurfrichtung und folglich den Ort, an welchem das Werkstück die Drehmaschine verlässt, zu wählen, so dass die mit der vorschlagsgemäßen Auswurfvorrichtung bestückte Drehmaschine sehr flexibel einsetzbar ist.

Gemäß der Erfindung, wobei die Strömungsrichtmittel zumindest einen in die Einspanneinrichtung oder das Abführrohr einbringbaren und dort fixierbaren Sperrkörper umfassen, mit welchem die Einspanneinrichtung oder das Abführrohr abdichtbar ist und der Sperrkörper von einem Werkstück gebildet wird, umfasst das Verfahren folgenden Schritt:
- Abdichten der Einspanneinrichtung durch Fixieren des Werkstücks in der Einspanneinrichtung, so dass das Fluid den Hohlraum durch das Abführrohr verlässt und das Fluid das bearbeitete Werkstück über das Abführohr auswirft.

Die Einspanneinrichtung kann dadurch für das Fluid gesperrt werden, dass ein eingespanntes Werkstück als Sperrkörper verwendet wird, wodurch bewirkt wird, dass das Fluid den Hohlraum durch das Abführrohr verlässt. Wie bereits erwähnt, ist keine absolute Abdichtung erforderlich, auch wenn diese den Idealfall darstellt. Eine Leckage innerhalb von bestimmten Grenzen kann toleriert werden. Insofern müssen keine weiteren Maßnahmen getroffen werden, um die Einspanneinrichtung für das Fluid zu sperren. Man muss nur die Fördereinheit so ansteuern, dass sie das Fluid nicht fördert, wenn das Werkstück aus der Einspanneinrichtung entnommen werden soll und folglich die Einspannung aufgehoben wird.

Für den Fall, dass lange Werkstücke bearbeitet werden sollen, bei denen das Verhältnis zwischen Länge und Durchmesser größer als drei ist, muss das Werkstück an beiden Enden eingespannt werden, da es sonst während der Bearbeitung zu Schwingungen und Vibrationen kommt, welche die Bearbeitungspräzision negativ beeinflussen. In diesem Fall umfasst die Drehmaschine eine Hauptspindel und eine Abgreifspindel. Derartige Drehmaschinen werden auch als Langdreher bezeichnet. Die Abfuhr des bearbeiteten Werkstücks erfolgt üblicherweise über die Abgreifspindel. Insofern betrifft die Erfindung auch die Verwendung der vorschlagsgemäßen Auswurfvorrichtung für Abgreifspindeln.

Beispielhafte Ausführungsformen der Erfindung werden im Folgenden unter Bezugnahme auf die beigefügten Zeichnungen näher erläutert. Es zeigen
- Figur 1: eine prinzipielle Darstellung einer Drehmaschine mit einem ersten Ausführungsbeispiel einer erfindungsgemäßen Auswurfvorrichtung,
- Figur 2: eine prinzipielle Darstellung einer Drehmaschine mit einem zweiten Ausführungsbeispiel einer erfindungsgemäßen Auswurfvorrichtung,
- Figur 3: eine Seitenansicht mit einer Teilschnittdarstellung eines Ausführungsbeispiels einer Drehmaschine mit einer erfindungsgemäßen Auswurfvorrichtung, und
- Figur 4: eine vergrößerte Darstellung des in Figur 3 gekennzeichneten Ausschnitts.

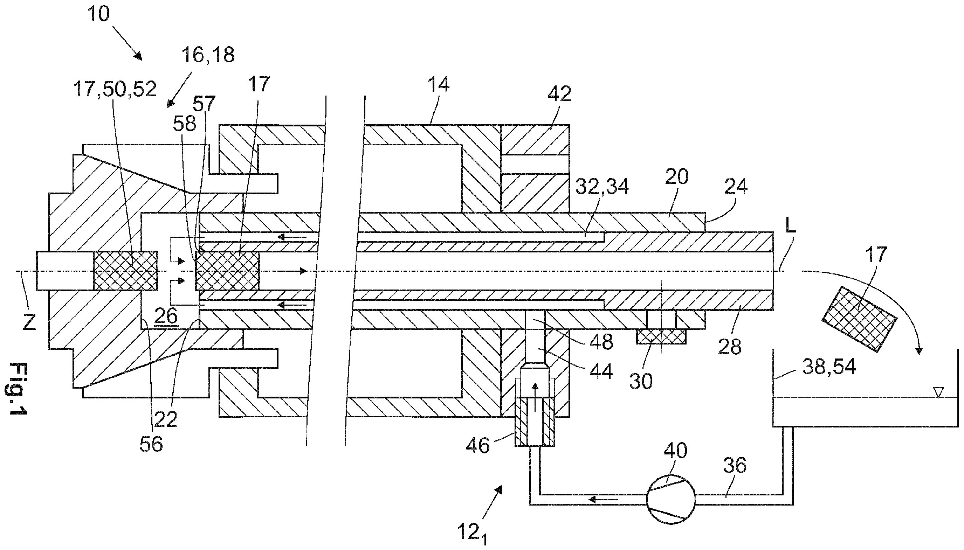

Figur 1 zeigt eine prinzipielle Darstellung einer Drehmaschine 10, welche eine erfindungsgemäße Auswurfvorrichtung 12₁ nach einem ersten Ausführungsbeispiel aufweist. Die Drehmaschine 10 weist ein Gehäuse 14 auf, an welchem eine drehbar gelagerte Einspanneinrichtung 16, mit welcher ein zu bearbeitendes Werkstück 17 während der Bearbeitung eingespannt werden kann. Im dargestellten Beispiel weist die Einspanneinrichtung 16 eine Spannzange 18 auf, in welches das zu bearbeitende Werkstück 17 um ein Einspannzentrum Z eingespannt und fixiert werden kann. Ein Werkzeug, mit welchem das Werkstück 17 drehend bearbeitet wird, ist nicht dargestellt und ist auch nicht erfindungserheblich.

Die Auswurfvorrichtung 12₁ umfasst ein horizontal im Gehäuse 14 angeordnetes Abführrohr 20 mit einer Längsachse L, welches ein erstes Ende 22 und ein zweites Ende 24 aufweist. Im Bereich des ersten Endes 22 ist das Abführrohr 20 mit der Einspanneinrichtung 16 verbunden. Im dargestellten Ausführungsbeispiel ist das Abführrohr 20 in einen von der Spannzange 18 gebildeten, zylindrischen Hohlraum 26 eingeschoben. Mit dem zweiten Ende 24 ragt das Abführrohr 20 aus dem Gehäuse 14 der Drehmaschine 10 heraus. Die Längsachse L des Abführrohrs 20 fluchtet mit dem Einspannzentrum Z der Spannzange 18.

In das Abführrohr 20 ist ein Innenrohr 28 eingeschoben, welches entlang der Längsachse L des Abführrohrs 20 verschiebbar ist. Der Innendurchmesser des Abführrohrs 20 und der Außendurchmesser des Innenrohrs 28 sind in etwa gleich. Die Position des Innenrohrs 28 im Abführrohr 20 ist mit einer Feststellschraube 30 fixierbar. Das Innenrohr 28 umfasst einen Abschnitt 32, in welchem das Innenrohr 28 einen reduzierten Außendurchmesser aufweist. Folglich bildet sich ein parallel zur Längsachse L verlaufender und in den Hohlraum 26 mündender ringspaltförmiger Kanal 34 zwischen dem Innenrohr 28 und dem Abführrohr 20. Der Kanal 34 ist Teil einer zur Auswurfvorrichtung 12₁ gehörenden Fluidleitung 36, welche in den Hohlraum 26 mündet.

In einem Fluidreservoir 38 wird ein Fluid, beispielsweise Maschinenöl, vorgehalten und mittels einer Fördereinheit 40, insbesondere mittels einer Hochdruckpumpe, entlang der Fluidleitung 36 zum Hohlraum 26 gefördert. Fallabhängig können das Fluidreservoir 38, die Fördereinheit 40 und/oder zumindest ein Teil der Fluidleitung 36 bereits in der Drehmaschine 10 vorhanden sein, so dass die Auswurfvorrichtung 12₁ nur noch hieran angeschlossen werden muss. Ist dies nicht der Fall, kann die Auswurfvorrichtung 12₁ an ein externes Fluidnetz, beispielsweise ein Druckluftnetz der Werkhalle, angeschlossen werden. Ist auch dies nicht der Fall, können das Fluidreservoir 38, die Fördereinheit 40 und/oder zumindest ein Teil der Fluidleitung 36 Bestandteil der Auswurfvorrichtung 12₁ sein.

Die Auswurfvorrichtung 12₁ umfasst ferner einen Anschlusskörper 42, der mit dem Gehäuse 14 verbindbar ist, beispielsweise mit nicht dargestellten Schrauben. Der Anschlusskörper 42 weist eine Durchgangsbohrung 44 auf, die in etwa senkrecht zur Längsachse L des Abführrohrs 20 verläuft und an welche ein Anschlussstück 46 der Fluidleitung 36 zum Ausbilden einer FluidKommunikation anschließbar ist. Folglich ist die Durchgangsbohrung 44 Teil der Fluidleitung 36. Wie bereits erwähnt, können das Fluidreservoir 38, die Fördereinheit 40 und/oder zumindest ein Teil der Fluidleitung 36 bereits in der Drehmaschine 10 vorhanden sein. In diesem Fall ist der Anschlusskörper 42 so ausgestaltet, dass er die Fluidverbindung zur internen Fluidleitung 36 der Drehmaschine 10 herstellt. Die Fluidleitung 36 kann auch Teil eines externen Fluidnetzes wie das bereits erwähnte Druckluftnetz sein. In diesem Fall stellt der Anschlusskörper 42 die Fluidverbindung zum externen Fluidnetz her.

Fluchtend zur Durchgangsbohrung 44 weist das Abführrohr 20 eine Durchgangsöffnung 48 auf, in welche die Durchgangsbohrung 44 mündet und die so angeordnet ist, dass sie in jeder Stellung des Innenrohrs 28 im Abführrohr 20 in den Kanal 34 mündet. Folglich besteht eine Fluidkommunikation zwischen dem Fluidreservoir 38 und dem Hohlraum 26, so dass Fluid von der Fördereinheit 40 vom Fluidreservoir 38 in den Hohlraum 26 gefördert werden kann.

Weiterhin umfasst die Auswurfvorrichtung 12₁ Strömungsrichtmittel 50, mit welchen die Strömungsrichtung des Fluids aus dem Hohlraum 26 so gewählt werden kann, dass das Fluid den Hohlraum 26 entweder durch das Abführrohr 20 oder durch die Einspanneinrichtung 16 verlässt. Im in Figur 1 dargestellten Ausführungsbeispiel umfassen die Strömungsrichtmittel 50 einen Sperrkörper 52, der in der Einspanneinrichtung 16 fixiert ist. Der Sperrkörper 52 wird von einem Werkstück 17 gebildet, welches in der Einspanneinrichtung 16 eingespannt ist. Folglich verhindert das Werkstück 17, dass das Fluid die Einspanneinrichtung 16 entlang des Einspannzentrums Z durchströmen kann.

Nachdem ein Werkstück 17 bearbeitet worden ist, wird es von einem nachfolgenden Werkstück 17 zum Abführrohr 20 hin und in das Innenrohr 28 geschoben. Das durch den Kanal 34 in den Hohlraum 26 geförderte Fluid wird im Hohlraum 26 in das Innenrohr 28 umgelenkt. Da das im Innenrohr 28 befindliche Werkstück 17 entlang der Längsachse L nicht fixiert ist, wird es vom Fluid durch das Innenrohr 28 zum zweiten Ende 24 hin geschoben, wo es aus der Drehmaschine 10 bzw. aus dem Innenrohr 28 ausgeworfen wird. Das Fluidreservoir 38 ist als Auffangbecken 54 ausgestaltet, in welchem sowohl die ausgeworfenen Werkstücke 17 als auch das aus dem Innenrohr 28 austretende Fluid aufgefangen werden. Die Menge des Fluids, welches durch die Auswurfvorrichtung 12₁ gefördert wird, ist so gewählt, dass das Auffangbecken 54 immer einen Mindestfüllstand aufweist, so dass das ausgeworfene Werkstück 17 nicht direkt auf dem Boden des Auffangbeckens aufschlägt, sondern erst auf die Oberfläche des Fluids auftrifft, so dass der Aufprall gedämpft wird. Die Fluidleitung 36 ist mit dem Auffangbecken 54 verbunden, so dass das Fluid im Kreis gefördert werden kann. Die Förderrichtung des Fluids innerhalb der Drehmaschine 10 ist mit den Pfeilen gekennzeichnet.

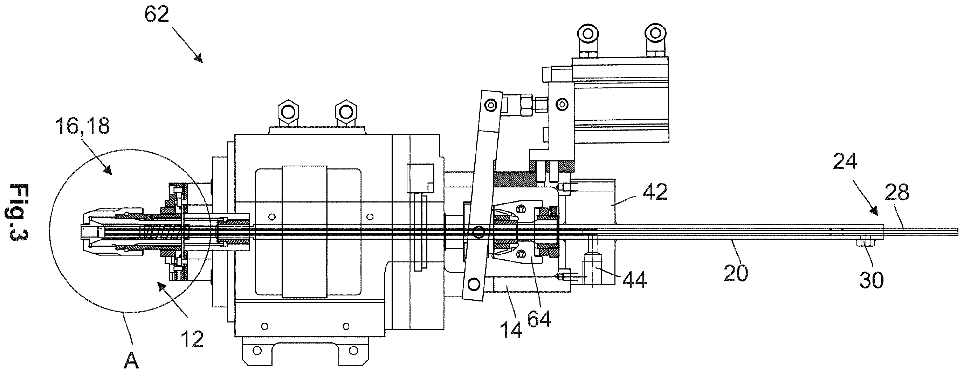

Die Drehmaschine 10 wird auf folgende Weise betrieben: Zunächst wird ein zu bearbeitendes Werkstück 17 in die Einspanneinrichtung 16 eingebracht und eingespannt. Die Einspanneinrichtung 16 wird mit einer Antriebseinrichtung 64 (vgl. Figur 3) in Drehung versetzt und das Werkstück 17 mit einem nicht dargestellten Werkzeug bearbeitet. Nach abgeschlossener Bearbeitung wird die Einspanneinrichtung 16 geöffnet und ein zu bearbeitendes Werkstück 17 in die Einspanneinrichtung 16 eingebracht. Beim Einbringen in die Einspanneinrichtung 16 schiebt das zu bearbeitende Werkstück 17 das fertig bearbeitete Werkstück 17 in Richtung des Hohlraums 26. Je nach Länge des Werkstücks 17 können sich mehrere Werkstücke 17 gleichzeitig in der Einspanneinrichtung 16 befinden. Das bearbeitete Werkstück 17 wird folglich solange zum Hohlraum 26 geschoben, bis dass es in das Innenrohr 28 eingreift. Der Abstand zwischen dem Innenrohr 28 und einer senkrecht zum Einspannzentrum Z verlaufenden Fläche 56 des Hohlraums 26 ist dabei geringer als die Länge eines Werkstücks 17, so dass das Werkstück 17 entweder von der Einspanneinrichtung 16 oder vom Innenrohr 28 geführt wird und nicht in den Hohlraum 26 fällt. Hierzu kann das Innenrohr am zum Hohlraum 26 hinweisenden inneren Ende eine Verjüngung 57 zum Führen des Werkstücks 17 aufweisen.

Sobald das zu bearbeitende Werkstück 17 eingespannt ist, wird die Fördereinheit 40 aktiviert und Fluid in den Hohlraum 26 gefördert. Der Förderdruck kann dabei bis zu 150 bar betragen. Dieser Druck greift an der zum Hohlraum 26 hinweisenden Stirnfläche 58 des Werkstücks 17 an und befördert es durch das Innenrohr 28, bis dass das Werkstück 17 das Innenrohr 28 vollständig durchquert hat und aus dem Innenrohr 28 ausgeworfen wird. Anschließend wird die Fördereinheit 40 deaktiviert, so dass die Einspanneinrichtung 16 geöffnet werden kann.

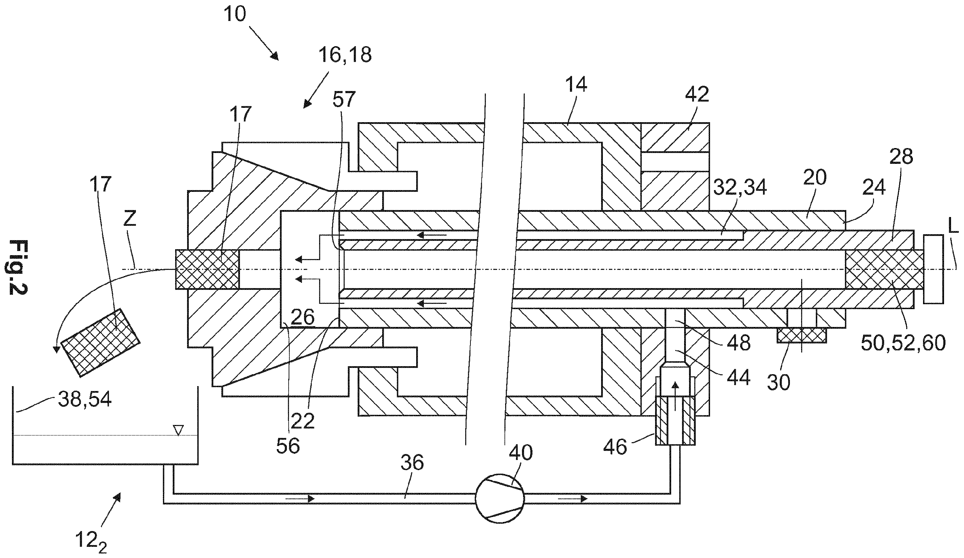

In Figur 2 ist ein zweites Ausführungsbeispiel einer erfindungsgemäßen Auswurfvorrichtung 12₂ dargestellt, Welche weitgehend denselben Aufbau wie das in Figur 1 dargestellte Ausführungsbeispiel aufweist. Allerdings ist der Sperrkörper 52 als ein Stopfen 60 ausgebildet, welcher in das freie Ende des Innenrohrs 28 eingebracht ist. Zudem ist das Auffangbecken 54 im Bereich der Einspanneinrichtung 16 angeordnet. Hierdurch wird bewirkt, dass sobald das Innenrohr 28 mit Fluid gefüllt ist, das Fluid den Hohlraum 26 nicht über das Innenrohr 28, sondern über die Einspanneinrichtung 16 verlassen kann.

In diesem Fall wird die Drehmaschine 10 auf folgende Weise betrieben: Ein zu bearbeitendes Werkstück 17 wird wie beschrieben in die Einspanneinrichtung 16 eingebracht und eingespannt. Nach erfolgter Bearbeitung wird die Einspanneinrichtung 16 geöffnet und die Fördereinheit 40 aktiviert. Folglich drückt das Fluid das bearbeitete Werkstück 17 gegen die Richtung, mit welcher es in die Einspanneinrichtung 16 eingebracht wurde, aus der Einspanneinrichtung 16 heraus. Das Fluid und das bearbeitete Werkstück 17 werden vom Auffangbecken 54 aufgenommen. Nachdem das Werkstück 17 die Einspanneinrichtung 16 verlassen hat, wird die Fördereinheit aktiviert, so dass ein neues Werkstück 17 eingespannt werden kann.

Nicht dargestellt ist eine Ausführungsform, in welcher ein erstes Auffangbecken 54 im Bereich des zweiten Endes 24 des Abführrohrs 20, wie in Figur 1 dargestellt, und ein zweites Auffangbecken 54 im Bereich der Einspanneinrichtung 16, wie in Figur 2 dargestellt, vorgesehen sind.

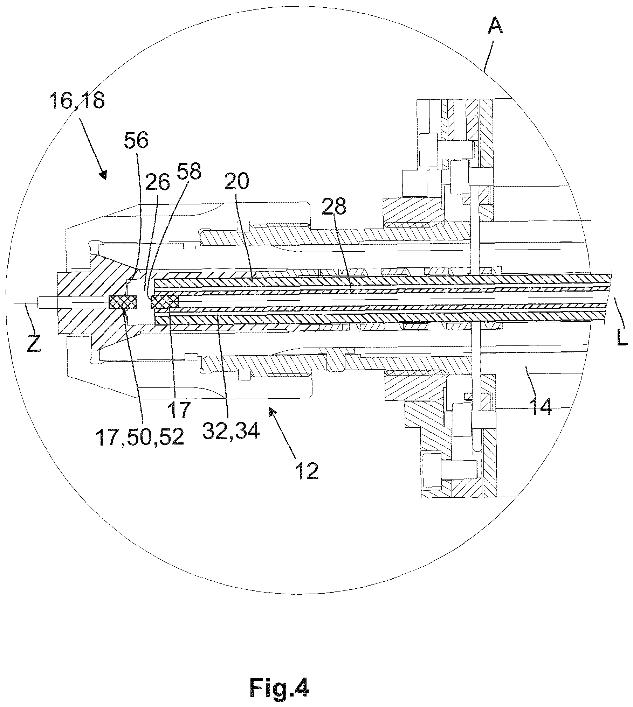

In Figur 3 ist eine Seitenansicht mit einer Teilschnittdarstellung eines Ausführungsbeispiels einer Abgreifspindel 62 einer Drehmaschine 10 mit einer erfindungsgemäßen Auswurfvorrichtung 12 dargestellt. Das Fluidreservoir 38, die Fluidleitung 36 und die Fördereinheit 40 sind dabei nicht dargestellt. In Figur 4 ist der in Figur 3 gekennzeichnete Ausschnitt A vergrößert gezeigt. Der für Figur 1 beschriebene Aufbau trifft im Wesentlichen auch auf die Abgreifspindel 62 zu. Die Abgreifspindel 62 ist Teil einer Drehmaschine 10, welche für lange Werkstücke eingesetzt werden. Als lange Werkstücke gelten Werkstücke, bei denen das Verhältnis zwischen Länge und Durchmesser größer als 3 ist. Aufgrund dieser Länge muss das Werkstück 17 an beiden Enden eingespannt werden, da bei einer einseitigen Einspannung zu hohe Schwingungen und Vibrationen auftreten, welche die Bearbeitung ungenau werden lassen. Die Drehmaschinen 10 für lange Werkstücke, auch als Langdreher bezeichnet, weisen daher zwei Spindeln auf, nämlich eine Hauptspindel und die dargestellte Abgreifspindel 62. Der Name Abgreifspindel 62 deutet darauf hin, dass die Abfuhr des bearbeiteten Werkstücks 17 über die Abgreifspindel 62 verläuft und nicht über die Hauptspindel. Die erfindungsgemäße Auswurfvorrichtung 12₁ kann aber sowohl für die Haupt- als auch für die Abgreifspindel 62 verwendet werden.

Zu erwähnen ist, dass die Abgreifspindel 62 eine Antriebseinrichtung 64 aufweist, mit welcher die Einspanneinrichtung 16 in Rotation versetzt werden kann, ohne dabei jedoch das Abführrohr 20 und das Innenrohr 28 mitzudrehen. Die Einspanneinrichtung 16 kann auf bis zu 20 000 U/min beschleunigt werden.

### Bezugszeichenliste

- 10: Drehmaschine
- 12₁: Auswurfvorrichtung
- 14: Gehäuse
- 16: Einspanneinrichtung
- 17: Werkstück
- 18: Spannzange

- 20: Abführrohr
- 22: erstes Ende
- 24: zweites Ende
- 26: Hohlraum
- 28: Innenrohr

- 30: Feststellschraube
- 32: Abschnitt
- 34: Kanal
- 36: Fluidleitung
- 38: Fluidreservoir

- 40: Fördereinheit
- 42: Anschlusskörper
- 44: Durchgangsbohrung
- 46: Anschlussstück
- 48: Durchgangsöffnung

- 50: Strömungsrichtmittel
- 52: Sperrkörper
- 54: Auffangbecken
- 56: Fläche
- 57: Verjüngung
- 58: Stirnfläche
- 60: Stopfen
- 62: Abgreifspindel
- 64: Antriebseinrichtung

- A: Ausschnitt
- L: Längseinheit
- Z: Einspannzentrum

## Patentansprüche

1. Auswurfvorrichtung zum Auswerfen von Werkstücken (17), welche in einer Drehmaschine (10) gefertigt werden, wobei die Drehmaschine (10)
- ein Gehäuse (14),
- eine am Gehäuse (14) drehbar gelagerte Einspanneinrichtung (16) zum Einspannen des Werkstücks (17) während der Bearbeitung, und
- ein das Gehäuse (14) durchlaufendes Abführrohr (20) mit einem ersten Ende (22) und einem zweiten Ende (24) aufweist, und
- die Einspanneinrichtung (16) einen Hohlraum (26) umschließt, mit welchem das Abführrohr (20) über das erste Ende (22) verbunden ist und das bearbeitete Werkstück (17) zum Auswerfen aus der Drehmaschine (10) vom ersten Ende (22) zum zweiten Ende (24) durch das Abführrohr (20) durchführbar ist, und
die Auswurfvorrichtung (12)
- an eine Fluidleitung (36) anschließbar ist, welche mit einem Fluidreservoir (38) zum Vorhalten eines Fluids, und dem Hohlraum (26) in Kommunikation steht und welche mit einer Fördereinheit (40) zum Fördern des Fluids vom Fluidreservoir (38) in den Hohlraum (26) zusammenwirkt, und
die Auswurfvorrichtung (12)
- Strömungsrichtmittel (50) umfasst, mit welchen die Strömungsrichtung des Fluids aus dem Hohlraum (26) so gewählt werden kann, dass das Fluid den Hohlraum (26) entweder durch das Abführrohr (20) oder durch die Einspanneinrichtung (16) verlässt, wobei das Fluid das bearbeitete Werkstück (17) je nach gewählter Strömungsrichtung durch das Abführohr (20) oder die Einspanneinrichtung (16) fördert und auswirft,
**dadurch gekennzeichnet, dass** die Strömungsrichtmittel (50) zumindest einen in die Einspanneinrichtung (16) oder das Abführrohr (20) einbringbaren und dort fixierbaren Sperrkörper (52) umfassen, mit welchem die Einspanneinrichtung (16) oder das Abführrohr (20) abdichtbar ist.

2. Auswurfvorrichtung nach Anspruch 1,
**dadurch gekennzeichnet, dass** der Sperrkörper (52) von einem Werkstück (17) gebildet wird.

3. Auswurfvorrichtung nach einem der vorherigen Ansprüche,
**dadurch gekennzeichnet, dass** die Auswurfvorrichtung (121) ein in das Abführrohr (20) einschiebbares Innenrohr (28) aufweist, welches relativ zum Abführrohr (20) verschiebbar und fixierbar ist, wobei das bearbeitete Werkstück (17) zum Auswerfen aus der Drehmaschine (10) durch das Innenrohr (28) durchführbar ist.

4. Auswurfvorrichtung nach Anspruch 3,
**dadurch gekennzeichnet, dass** zwischen dem Innenrohr (28) und dem Abführrohr (20) ein in den Hohlraum (26) mündender Kanal (34) gebildet ist, welcher einen Teil der Fluidleitung (36) bildet.

5. Auswurfvorrichtung nach Anspruch 4,
**dadurch gekennzeichnet, dass** der Kanal (34) von einem Abschnitt gebildet wird, in welchem das Innenrohr (28) einen verringerten Außendurchmesser aufweist.

6. Auswurfvorrichtung nach einem der Ansprüche 4 oder 5,
**dadurch gekennzeichnet, dass** die Fluidleitung (36) einen mit dem Gehäuse (14) verbindbaren Anschlusskörper (42) umfasst, der einen mit dem Kanal (34) in Kommunikation bringbaren Abschnitt der Fluidleitung (36) bildet.

7. Auswurfvorrichtung nach einem der vorherigen Ansprüche,
**dadurch gekennzeichnet, dass** das Fluidreservoir (38) zumindest ein Auffangbecken (54) umfasst, welches im Bereich der Einspanneinrichtung (16) und/oder des zweiten Endes (24) des Abführrohrs (20) angeordnet ist und welches die ausgeworfenen Werkstücke (17) aufnimmt.

8. Drehmaschine (10) zum Bearbeiten von Werkstücken (17), umfassend
- ein Gehäuse (14),
- eine am Gehäuse (14) drehbar gelagerte Einspanneinrichtung (16) zum Einspannen des Werkstücks (17) während der Bearbeitung, und
- ein das Gehäuse (14) durchlaufendes Abführrohr (20) mit einem ersten Ende (22) und einem zweiten Ende (24), wobei
- die Einspanneinrichtung (16) einen Hohlraum (26) umschließt, mit welchem das Abführrohr (20) über das erste Ende (22) verbunden ist und das bearbeitete Werkstück (17) zum Auswerfen aus der Drehmaschine (10) vom ersten Ende (22) zum zweiten Ende (24) durch das Abführrohr (20) durchführbar ist, und
- eine Auswurfvorrichtung (12₁) nach einem der vorherigen Ansprüche.

9. Verfahren zum Auswerfen von Werkstücken (17), welche in einer Drehmaschine (10) nach Anspruch 8 gefertigt werden, wobei der Sperrkörper (52) von einem Werkstück (17) gebildet wird umfassend folgende Schritte:
- Vorhalten eines Fluids in einem Fluidreservoir (38),
- Fördern des Fluids vom Fluidreservoir (38) in den Hohlraum (26) mit einer Fördereinheit (40), welche mit einer Fluidleitung (36) zusammenwirkt, welche mit dem Fluidreservoir (38) und dem Hohlraum (26) in Kommunikation steht,
- Wählen der Strömungsrichtung des Fluids mit Strömungsrichtmitteln (50) derart, dass das Fluid den Hohlraum (26) entweder durch das Abführrohr (20) oder durch die Einspanneinrichtung (16) verlässt und das Fluid das bearbeitete Werkstück (17) je nach gewählter Strömungsrichtung durch das Abführohr oder die Einspanneinrichtung (16) fördert und auswirft, und
- Abdichten der Einspanneinrichtung (16) durch Fixieren des Werkstücks (17) in der Einspanneinrichtung (16), so dass das Fluid den Hohlraum (26) durch das Abführrohr (20) verlässt und das Fluid das bearbeitete Werkstück (17) über das Abführohr auswirft.

## Claims

1. Ejector device for ejecting workpieces (17) which are produced in a lathe (10), wherein the lather (10) comprises
- a housing (14),
- a gripping device (16) rotatably mounted on the housing (14) for gripping the workpiece (17) during the machining, and
- a discharge pipe (20) running through the housing (14) with a first end (22) and a second end (24), and
- the gripping device (16) surrounds a cavity (26) to which the discharge pipe (20) is connected by means of the first end (22) and the machined workpiece (17) can be passed through the discharge pipe (20) from the first end (22) to the second end (24) for ejection from the lathe (10), and
the ejector device (12)
- can be connected to a fluid conduit (36) which communicates with a fluid reservoir (38) for holding a fluid and with the cavity (26) and which interacts with a conveyor unit (40) for conveying the fluid from the fluid reservoir (38) into the cavity (26), and
the ejector device (12)
- comprises flow directing means (50), by which the flow direction of the fluid out of the cavity (26) can be selected so that the fluid leaves the cavity (26) either through the discharge pipe (20) or through the gripping device (16), wherein depending upon the selected flow direction the fluid conveys and ejects the machined workpiece (17) through the discharge pipe (20) or the gripping device (16),
**characterised in that** the flow directing means (50) comprise at least one shut-off member (52) which can be introduced into the gripping device (16) or the discharge pipe (20) and can be fixed there, and by which the gripping device (16) or the discharge pipe (20) can be sealed off.

2. Ejector device according to claim 1, **characterised in that** the shut-off member (52) is formed by a workpiece (17).

3. Ejector device according to one of the preceding claims, **characterised in that** the ejector device (121) has an inner pipe (28) which can be inserted into the discharge pipe (20) and which can be moved and fixed relative to the discharge pipe (20), wherein the machined workpiece (17) can be passed through the inner pipe (28) for ejection from the lathe (10).

4. Ejector device according to claim 3, **characterised in that** between the inner pipe (28) and the discharge pipe (20) a duct (34) is formed which opens into the cavity (26) and which forms a part of the fluid conduit (36).

5. Ejector device according to claim 4, **characterised in that** the duct (34) is formed by a portion in which the inner pipe (28) has a reduced external diameter.

6. Ejector device according to one of claims 4 or 5, **characterised in that** the fluid conduit (36) comprises a connecting member (42) which can be connected to the housing (14) and which forms a portion of the fluid conduit (36) which can be brought into communication with the duct (34).

7. Ejector device according to one of the preceding claims, **characterised in that** the fluid reservoir (38) comprises at least one collecting basin (54) which is arranged in the region of the gripping device (16) and/or of the second end (24) of the discharge pipe (20) and which receives the ejected workpieces (17).

8. Lathe (10) for machining workpieces (17), comprising
- a housing (14),
- a gripping device (16) rotatably mounted on the housing (14) for gripping the workpiece (17) during the machining, and
- a discharge pipe (20) running through the housing (14) with a first end (22) and a second end (24), wherein
- the gripping device (16) surrounds a cavity (26) to which the discharge pipe (20) is connected by means of the first end (22) and the machined workpiece (17) can be passed through the discharge pipe (20) from the first end (22) to the second end (24) for ejection from the lathe (10), and
- an ejection device (12₁) according to one of the preceding claims.

9. Method of ejecting workpieces (17) which are produced in a lathe (10) according to claim 8, wherein the shut-off member (52) is formed by a workpiece (17) comprising the following steps:
- holding a fluid in a fluid reservoir (38),
- conveying the fluid from the fluid reservoir (38) into the cavity (26) with a conveyor unit (40) which interacts with a fluid conduit (36) which communicates with the fluid reservoir (38) and the cavity (26),
- selecting the flow direction of the fluid with flow directing means (50) in such a way that the fluid leaves the cavity (26) either through the discharge pipe (20) or through the gripping device (16) and depending upon the selected flow direction the fluid conveys and ejects the machined workpiece (17) through the discharge pipe or the gripping device (16), and
- sealing the gripping device (16) by fixing the workpiece (17) in the gripping device (16) so that the fluid leaves the cavity (26) through the discharge pipe (20) and the fluid ejects the machined workpiece (17) by means of the discharge pipe.

## Revendications

1. Dispositif d'éjection de pièces (17) usinées dans un tour (10), le tour (10) comportant :
- un boîtier (14),
- un dispositif de serrage (16) monté à rotation dans le boîtier (14) pour serrer la pièce (17) pendant l'usinage, et
- un tube d'évacuation (20) traversant le boîtier (14) et ayant une première extrémité (22) et une seconde extrémité (24), et
- l'installation de serrage (16) entoure une cavité (26) reliée par la première extrémité (22) au tube d'évacuation (20) et réalisée pour éjecter la pièce usinée (17) du tour (10) par la première extrémité (22) vers la seconde extrémité (24) à travers le tube d'évacuation (20), et
le dispositif éjecteur (12),
- se raccord à une conduite de fluide (36) en communication avec un réservoir de fluide (38) contenant un fluide et la cavité (26) et qui coopère avec une unité de transfert (40) pour transférer le fluide du réservoir (38) à la cavité (26), et
le dispositif éjecteur (12),
- comprend un moyen de direction du flux (50) qui permet de sélectionner la direction du flux de fluide à partir de la cavité (26) pour que le fluide sorte de la cavité (26) par le tube d'évacuation (20), ou par l'installation de serrage (16), le fluide transférant et éjectant la pièce usinée (17) à travers le tube d'évacuation (20) ou l'installation de serrage (16) selon la direction de flux sélectionnée,
**caractérisé en ce que**
le moyen de direction de flux (50) comprend un organe d'obturation (52) qui se place dans l'installation de serrage (16) ou dans le tube d'évacuation (20) pour réaliser une fermeture étanche.

2. Dispositif éjecteur selon la revendication 1,
**caractérisé en ce que**
l'organe d'obturation (52) est constitué par une pièce (17).

3. Dispositif éjecteur selon l'une des revendications précédentes,
**caractérisé en ce que**
le dispositif éjecteur (121) comporte un tube intérieur (28) glissé dans le tube éjecteur (20) et qui peut être fermé et fixé par rapport au tube éjecteur (20), la pièce usinée (17) étant éjectée du tour (10) à travers le tube intérieur (28).

4. Dispositif éjecteur selon la revendication 3,
**caractérisé en ce qu'**
on forme un canal (34) entre le tube intérieur (28) et le tube d'éjection (20) qui débouche dans la cavité (26), ce canal faisant partie de la conduite de fluide (36).

5. Dispositif éjecteur selon la revendication 4,
**caractérisé en ce que**
le canal (34) est formé par un segment dans lequel le tube intérieur (28) a un diamètre extérieur réduit.

6. Dispositif éjecteur selon l'une des revendications 4 ou 5,
**caractérisé en ce que**
la conduite de fluide (36) comporte un organe de raccordement (42) relié au boîtier (14) et qui forme un segment de la conduite de fluide (36) qui peut être mis en communication avec le canal (34).

7. Dispositif selon l'une des revendications précédentes,
**caractérisé en ce que**
le réservoir de fluide (38) comporte au moins un réceptacle (54) située au niveau de l'installation de serrage (16) et/ou de la seconde extrémité (24) du tube d'évacuation (20) et qui reçoit les pièces (17), éjectées.

8. Tour (10) pour usiner des pièces (17), comprenant :
- un boîtier (14),
- une installation de serrage (16) montée à rotation dans le boîtier (14) pour serrer la pièce (17) pendant l'usinage, et
- un tube d'évacuation (20) traversant le boîtier (14), ayant une première extrémité (22) et une seconde extrémité (24),
- l'installation de serrage (16) entourant une cavité (26) qui relie le tube d'évacuation (20) par la première extrémité (22) et que peut traverser la pièce usinée (17) pour être éjectée du tour (10) par la première extrémité (22) vers la seconde extrémité (24) à travers le tube d'évacuation (20), et
- un dispositif éjecteur (12₁) selon l'une des revendications précédentes.

9. Procédé d'éjection de pièce (17) usinée dans un tour (10) selon la revendication 8, l'organe d'obturation (52) étant formé par une pièce (17), comprenant les étapes suivantes :
- réserver un fluide dans un réservoir de fluide (38),
- fournir le fluide du réservoir (38) à la cavité (26) avec une unité de transfert (40) coopérant avec une conduite (36) communiquant avec le réservoir (38) et la cavité (26),
- choisir la direction de flux du fluide avec des moyens de direction de flux (50) pour que le fluide sorte de la cavité (26) par le tube d'évacuation (20), ou par l'installation de serrage (16) et le fluide transfère et éjecte la pièce usinée (17) selon la direction de flux choisie, à travers le tube d'évacuation ou l'installation de serrage (16), et
- fermer de manière étanche l'installation de serrage (16) en fixant la pièce (17) dans l'installation de serrage (16) pour que le fluide sorte de la cavité (26) à travers le tube d'évacuation (20) et éjecte la pièce usinée (17) par le tube d'évacuation.
